# EUROPEAN PATENT APPLICATION

(11) **EP 2 063 313 A1**
(43) Date of publication of application: **27.05.2009**
(21) Application number: 07791180.8
(22) Date of filing: 23.07.2007
(51) Int. Cl.: G02F 1/1335, G02F 1/13357, G09F 9/00

(54) **LIQUID CRYSTAL DISPLAY PANEL PROVIDED WITH MICROLENS ARRAY, METHOD FOR MANUFACTURING THE LIQUID CRYSTAL DISPLAY PANEL, AND LIQUID CRYSTAL DISPLAY DEVICE**

(30) Priority: 12.09.2006 JP 2006247135
(71) Applicant: Sharp Kabushiki Kaisha, Osaka-shi, Osaka 545-8522 (JP)
(72) Inventor: USUKURA, Naru, Matsusaka-shi, Mie 515-0005 (JP); SHIBATA, Satoshi, Nara-shi, Nara 630-8136 (JP); TOMOTOSHI, Takuma, Tenri-shi, Nara 632-0004 (JP); MURAO, Takehiro, Taki-gun, Mie 519-2157 (JP); URAKUBO, Eiichi, Tenri-shi, Nara 632-0056 (JP); YOSHIMIZU, Toshiyuki, Kizugawa-shi, Kyoto 619-0216 (JP)
(74) Representative: Müller - Hoffmann & Partner
(86) International application number: PCT/JP2007/064448
(87) International publication number: WO 2008/032490

(57) **Abstract**

There is provided a liquid crystal display panel with a microlens array which has a high withstanding pressure and which prevents display unevenness.

A liquid crystal display panel with a microlens array according to the present invention includes: a liquid crystal display panel having a plurality of pixels; a microlens array provided on a light-incident side of the liquid crystal display panel; a protection layer provided in contact with at least one of the microlens array and a support which is provided in a peripheral region of the microlens array, the protection layer being made of a curable resin; and a rear-face side optical film attached to the liquid crystal display panel via the protection layer, and a gap which is filled with air is formed between the microlens array and the protection layer.

## Description

### TECHNICAL FIELD

The present invention relates to a liquid crystal display panel and a liquid crystal display device, and more particularly to a liquid crystal display panel and a liquid crystal display device which include a microlens array.

### BACKGROUND ART

In recent years, liquid crystal display devices are widely used as display devices for monitors, projectors, mobile information terminals, mobile phones, and the like. Generally speaking, a liquid crystal display device allows the transmittance (or reflectance) of a liquid crystal display panel to vary with a driving signal, thus modulating the intensity of light from a light source for irradiating the liquid crystal display panel, whereby images and text characters are displayed. Liquid crystal display devices include direct-viewing type display devices in which images or the like that are displayed on the liquid crystal display panel are directly viewed, projection-type display devices (projectors) in which images or the like that are displayed on the display panel are projected onto a screen through a projection lens in an enlarged size, and so on.

By applying a driving voltage which corresponds to an image signal to each of the pixels that are in a regular matrix arrangement, a liquid crystal display device causes a change in the optical characteristics of a liquid crystal layer in each pixel, and regulates the transmitted light in accordance with the optical characteristics of the liquid crystal layer with polarizers (which typically are polarizing plates) being disposed at the front and rear thereof, thereby displaying images, text characters, and the like. In the case of a direct-viewing type liquid crystal display device, these polarizing plates are usually directly attached to a light-entering substrate (the rear substrate) and a light-outgoing substrate (the front substrate or viewer-side substrate) of the liquid crystal display panel.

Methods for applying an independent driving voltage for each pixel include a passive matrix type and an active matrix type. Among these, on a liquid crystal display panel of the active matrix type, switching elements and wiring lines for supplying driving voltages to the pixel electrodes need to be provided. As switching elements, non-linear 2-terminal devices such as MIM (metal-insulator-metal) devices and 3-terminal devices such as TFT (thin film transistor) devices are in use.

On the other hand, in a liquid crystal display device of the active matrix type, when strong light enters a switching element (in particular a TFT) which is provided on the display panel, its element resistance in an OFF state is decreased, thereby allowing the electric charge which was charged to the pixel capacitor under an applied voltage to be discharged, such that a predetermined displaying state cannot be obtained. Thus, there is a problem of light leakage even in a black state, thus resulting in a decreased contrast ratio.

Therefore, in a liquid crystal display panel of the active matrix type, in order to prevent light from entering the TFTs (in particular channel regions), a light shielding layer (called a black matrix) is provided on a TFT substrate on which the TFTs and the pixel electrodes are provided, or on a counter substrate that opposes the TFT substrate via the liquid crystal layer, for example.

Now, in the case where the liquid crystal display device is a reflection-type liquid crystal display device, decrease in the effective pixel area can be prevented by utilizing reflection electrodes as a light shielding layer. However, in a liquid crystal display device which performs displaying by utilizing transmitted light, providing a light shielding layer in addition to the TFTs, gate bus lines, and source bus lines, which do not transmit light, will allow the effective pixel area to be decreased, thus resulting in a decrease in the ratio of the effective pixel area to the total area of the displaying region, i.e., the aperture ratio.

Liquid crystal display devices are characterized by their light weight, thinness, and low power consumption, and therefore are widely used as display devices of mobile devices such as mobile phones and mobile information terminals. With a view to increasing the amount of displayed information, improving the image quality, and so on, there are stronger and stronger desires for display devices to have higher resolutions. Conventionally, it has been a standard to adopt QVGA displaying by 240 × 320 pixels for liquid crystal display devices of the 2 to 3-inch class, for example, but devices which perform VGA displaying by 480×640 pixels have also been produced in the recent years.

As liquid crystal display panels become higher in resolution and smaller in size, the aforementioned decrease in their aperture ratio presents a greater problem. The reason is that, even if there is a desire to reduce the pixel pitch, constraints such as electrical performance and fabrication techniques make it impossible for the TFTs, the bus lines, etc., to become smaller than certain sizes. It might be possible to enhance the brightness of the backlight in order to compensate for the decreased transmittance, but this will induce an increased power consumption, thus presenting a particular problem to mobile devices.

In recent years, as display devices of mobile devices, transflective-type liquid crystal display devices which perform displaying by utilizing light from a backlight under dark lighting and perform displaying by reflecting light entering the display surface of the liquid crystal display panel under bright lighting have become prevalent. In a transflective-type liquid crystal display device, a region (reflection region) which performs displaying in the reflection mode and a region (transmission region) which performs displaying in the transmission mode are included in each pixel. Therefore, reducing the pixel pitch significantly will lower the ratio of the area of transmission region to the total area of the displaying region (aperture ratio of the transmission region). Thus, although transflective-type liquid crystal display devices have the advantage of realizing displaying with a high contrast ratio irrespective of the ambient brightness, they have a problem in that their brightness is lowered as the aperture ratio of the transmission region becomes smaller.

As a method for improving the efficiency of light utility of such a liquid crystal display device including transmission regions, Patent Document 1 and Patent Document 2 disclose a method of providing microlenses for converging light in each pixel on the liquid crystal display panel in order to improve the effective aperture ratio of the liquid crystal display panel. Furthermore, the applicant discloses in Patent Document 3 a production method for a liquid crystal display panel with a microlens array, which is suitably used for transmission-type or transflective-type liquid crystal display devices and the like. According to the production method described in Patent Document 3, microlenses can be formed corresponding to the pixels in a self-aligning manner, with a high positional precision.
[Patent Document 1] Japanese Laid-Open Patent Publication No. 2003-337207
[Patent Document 2] Japanese Laid-Open Patent Publication No. 2005-275142
[Patent Document 3] Japanese Laid-Open Patent Publication No. 2005-196139 (Japanese Patent No. 3708112)

### DISCLOSURE OF INVENTION

### PROBLEMS TO BE SOLVED BY THE INVENTION

Unlike the liquid crystal display devices which are used for projection-type display devices such as projectors, direct-viewing type liquid crystal display devices, which are used for mobile devices, digital still cameras, etc., are likely to receive external depression. When a liquid crystal display device is depressed, the display section of the liquid crystal display device will experience a deformation or pressure difference, which may cause a display unevenness. Therefore, a direct-viewing type liquid crystal display device needs to have a firm structure will not allow display unevenness to occur at the time of depression.

In order to prevent destruction or deformation of the cover glass, the liquid crystal display device described in Patent Document 1 above has a construction in which a low-refractive index material is disposed between the microlens array and the cover glass. However, upon studying low-refractive index materials that can be disposed between the microlens array and the cover lens in order to solve the problem of depression, it has been found that the only such low-refractive index materials that are available are those materials whose refractive index is about 1.40, in actuality.

As the material of microlenses, a resin having a refractive index of about 1.60 is usually used. Therefore, when a material whose refractive index is about 1.4 is disposed between the microlenses and the cover glass, the refractive index difference between them will be only about 0.20, so that not such great convergence characteristics can be obtained. Therefore, although a material whose refractive index is about 1.4 may be applicable to a liquid crystal display device which allows microlenses with a relatively long focal length to be used, e.g., a projection-type liquid crystal display device, it is difficult to be used for a thin direct-viewing type liquid crystal display device which requires microlenses with a short focal length, because a sufficient convergence ability will not be obtained.

On the other hand, FIG. 12 of Patent Document 2 describes a liquid crystal display device in which a gap that is filled with air is formed between a microlens array and a polarizing plate. An adhesion layer is formed on the entire face of the polarizing plate facing the microlens array, and when the apex portion of each microlens digs into this adhesion layer, the microlens array and the polarizing plate adhere to each other. The gap between the periphery (the region around the apex portion) of each microlens and the polarizing plate is filled with air, whereby a relatively large convergence effect is obtained at the periphery of each microlens.

However, the inventors of the present invention have studied the influence of depressing a liquid crystal display device, and found that a liquid crystal display device with such a construction has a low withstanding pressure, so that display unevenness will easily occur in response to an external depression. The reasons are: the adhesive material of the adhesion layer having adhesiveness will enter into the gap (air layer) around the microlenses due to depression; irregularities will occur on the adhesion layer surface; the thickness of the adhesion layer will become non-uniform; and in some cases, the adhesive will fill a portion of the air layer. Furthermore, a problem may occur in that the adhesive material which has entered into the gap due to depression may continue to remain within the gap, so that the resultant display unevenness may remain thereafter. Through this study, it has been found that a construction in which the adhesion layer comes in contact with the microlenses is inappropriate for a liquid crystal display device for mobile use or the like, which particularly needs to have a high resolution in a small size and is likely to receive depression.

The present invention has been made in view of the above problems, and an objective thereof is provide: a liquid crystal display panel with microlenses in which an air layer is formed between a microlens array and a cover layer thereof to produce a sufficient convergence effect, and which is unlikely to have display unevenness in spite of an external depression; and a liquid crystal display device incorporating the same.

### MEANS FOR SOLVING THE PROBLEMS

A liquid crystal display panel with a microlens array according to the present invention comprises: a liquid crystal display panel having a plurality of pixels; a microlens array provided on a light-incident side of the liquid crystal display panel; a protection layer provided in contact with at least one of the microlens array and a support which is provided in a peripheral region of the microlens array, the protection layer being made of a curable resin; and a rear-face side optical film attached to the liquid crystal display panel via the protection layer, wherein, a gap is formed between the microlens array and the protection layer.

In one embodiment, the protection layer is made of substantially the same material as a material composing the microlens array.

In one embodiment, the protection layer is made of a material having a refractive index which is substantially equal to a refractive index of a material composing the microlens array.

In one embodiment, the protection layer is attached to the liquid crystal display panel via the microlens array, and the protection layer and the microlens array are attached so as to be in contact only at neighborhoods of apices of the microlenses composing the microlens array.

In one embodiment, the protection layer is formed so as to be in contact wit the support, and is attached to the liquid crystal display panel only via the support.

In one embodiment, the support is made of the same material as the microlens array.

In one embodiment, the support is made of a photocurable resin.

In one embodiment, the rear-face side optical film is attached to the protection layer via the adhesion layer.

A liquid crystal display device according to the present invention is a liquid crystal display device comprising the above liquid crystal display panel with a microlens array.

A production method for a liquid crystal display panel with a microlens array according to the present invention is a production method for a liquid crystal display panel with a microlens array, including a liquid crystal display panel, a microlens array provided on a light-incident side of the liquid crystal display panel, and a rear-face side optical film provided on a light-incident side of the microlens array, the method comprising: (a) a step of forming a microlens array on a surface of a liquid crystal display panel; (b) a step of forming a resin layer of curable resin on the light-incident side of the microlens array; and (c) a step of forming a protection layer by curing the resin layer, wherein, at step (b), the resin layer is formed so as to be in contact with at least one of the microlens array and a support which is provided in a peripheral region of the microlens array, and a gap is formed between the microlens array and the resin layer.

In one embodiment, in step (b), the resin layer is attached in a dry film form to at least one of the microlens array and the support.

In one embodiment, in step (b), the resin layer is formed so that the resin layer and the microlens array are in contact only at neighborhoods of apices of the microlenses composing the microlens array.

In one embodiment, in step (b), the resin layer is formed so as to be in contact only with the support.

One embodiment comprises, after step (c), a step of attaching a rear-face side optical film to the protection layer.

One embodiment comprises, before step (b), a step of attaching the resin layer to a rear-face side optical film.

In one embodiment, step (a) comprises a step of forming a photocurable resin layer on a surface of the liquid crystal display panel and a step of forming the microlens array by exposing the photocurable resin layer to light through the liquid crystal display panel.

In one embodiment, step (a) comprises a step of forming the support by exposing the photocurable resin layer to light through a mask.

In one embodiment, the protection layer is made of substantially the same material as a material composing the microlens array.

In one embodiment, the protection layer is made of a material having a refractive index which is substantially equal to a refractive index of a material composing the microlens array.

One embodiment comprises, after step (c), a step of cutting an attached substrate including the liquid crystal display panel, the microlens array, the protection layer, and the rear-face side optical film to form a plurality of liquid crystal display panels with microlens arrays.

### EFFECTS OF THE INVENTION

According to the present invention, a protection layer of curable resin is provided on a light-incident side of a microlens array, so that an adhesion layer will not be in contact with the microlens array. Therefore, even if the liquid crystal display panel or the liquid crystal display device is depressed, deformation of a gap (or an air layer) and entering of the adhesive material or the like into the gap can be prevented. As a result, there is provided a high-quality liquid crystal display panel with microlenses and a high-quality liquid crystal display device having a high strength and suffering from little display unevenness across the entire display surface. Moreover, according to the present invention, such a liquid crystal display panel and a liquid crystal display device can be produced efficiently.

### BRIEF DESCRIPTION OF DRAWINGS

[FIG. **1****]** A cross-sectional view schematically showing the construction of a liquid crystal display panel with a microlens array according to the present embodiment.
[FIG. **2****]** A cross-sectional view schematically showing the construction of a variant of a liquid crystal display panel with a microlens array according to the present embodiment.
[FIG. **3****] (a)** to **(e)** are cross-sectional views schematically showing a former portion of a production method according to the present embodiment.
[FIG. **4****] (a)** to **(d)** are cross-sectional views schematically showing a latter portion of a production method according to the present embodiment.
[FIG. **5****] (a)** to **(e)** are diagrams exemplifying microlens shapes that can be formed with a production method according to the present embodiment.
[FIG. **6****] (a)** to **(e)** are cross-sectional views schematically showing a former portion of a second production method according to the present embodiment.
[FIG. **7****] (a)** to **(d)** are cross-sectional views schematically showing a latter portion of a second production method according to the present embodiment.
[FIG. **8****]** A cross-sectional view schematically showing a liquid crystal display device having a liquid crystal display panel with a microlens array according to the present invention.

### DESCRIPTION OF REFERENCE NUMERALS

- **12**: liquid crystal display panel
- **14**: microlens array
- **14a**: microlens
- **14a'**: latent image of microlens
- **15**: gap
- **15'**: gap
- **17**: pixel aperture
- **22**: front-face side optical film
- **23**: rear-face side optical film
- **24**: adhesion layer
- **26**: support
- **26'**: latent image of support
- **30**: electrical element substrate
- **32**: counter substrate
- **34**: liquid crystal layer
- **35**: protection layer
- **36**: sealant
- **37**: adhesion layer
- **38**: resin layer
- **39**: resin layer
- **40**: photomask
- **41**: backlight
- **42**: light source
- **43**: light guide plate
- **44**: reflector
- **45**: multilayer substrate
- **100A, 100B, 100C**: liquid crystal display panel with a array microlens
- **200**: liquid crystal display device

### BEST MODE FOR CARRYING OUT THE INVENTION

Hereinafter, with reference to the drawings, the structure of a liquid crystal display panel with a microlens array according to an embodiment of the present invention will be described.

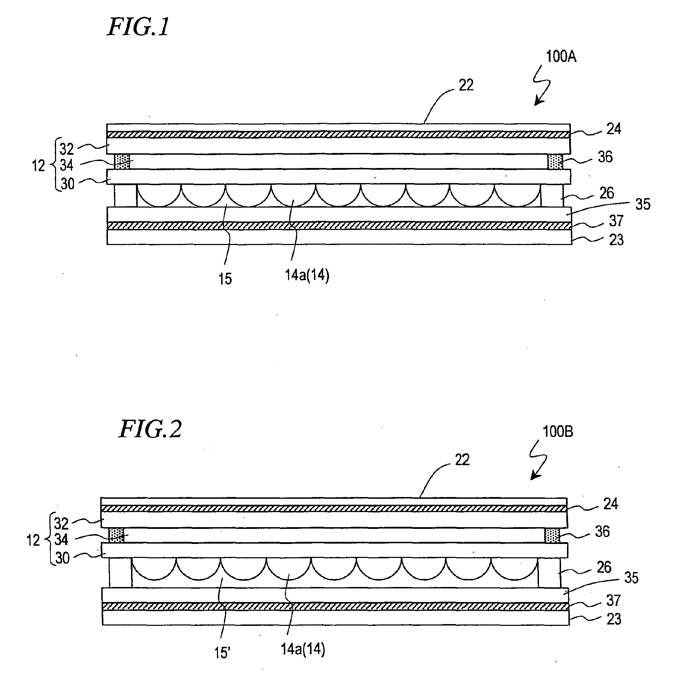

FIG. **1** is a cross-sectional view schematically showing the construction of a liquid crystal display panel **100A** with a microlens array of the present embodiment. As shown in the figure, the liquid crystal display panel **100A** with a microlens array of the present embodiment (hereinafter may be simply referred to as the liquid crystal display panel **100A)** includes a liquid crystal display panel (also referred to as a "liquid crystal cell") **12** having a plurality of pixels in a matrix arrangement, a microlens array **14** which is provided on the light-incident side (the lower side in the figure) of the liquid crystal display panel **12** and which includes a plurality of microlenses **14a,** supports **26** provided in a peripheral region of the microlens array **14,** a front-face side optical film **22** provided on the viewer's side of the liquid crystal display panel **12** (the upper side in the figure), and a rear-face side optical film **23** provided on the light-incident side of the microlens array **14.**

The liquid crystal display panel **12** includes an electrical element substrate **30** on which switching elements (e.g. TFTs or MIM devices) are provided for the respective pixels, a counter substrate **32** which is e.g. a color filter substrate (CF substrate), and a liquid crystal layer **34.** The liquid crystal layer **34** includes a liquid crystal material which is filled between the electrical element substrate **30** and the counter substrate **32,** and is sealed by a sealant **36** that is provided in the outer periphery.

Furthermore, the liquid crystal display panel **100A** with a microlens array includes a protection layer **35** which is made of a photocurable resin. The protection layer **35** is provided in contact with the microlens array **14** and the supports **26.** Herein, the protection layer **35** and the microlens array **14** are formed in such a manner that the protection layer **35** is in contact with only the neighborhood of the apex of each microlens **14a,** so that gaps **15** containing air are formed between the microlens array **14** and the protection layer **35.**

The front-face side optical film **22** is attached to the liquid crystal display panel **12** via an adhesion layer **24,** and the rear-face side optical film **23** is attached to the protection layer **35** via an adhesion layer **37.** Note that the front-face side optical film **22** and the rear-face side optical film **23** each include a polarization film which at least transmits linearly polarized light.

The protection layer **35** is made of an acryl-type or epoxy-type UV curable resin having a high transmittance for visible light, but may instead be made of a thermosetting resin. Preferably, the protection layer **35** is made of the same material as that of the microlenses **14a,** or a material having a refractive index which is substantially equal to the refractive index of the material composing the microlenses **14a.** Moreover, as will be described later, it is preferable that the supports **26** are made of the same material as that of the microlenses **14a,** whereby the production steps can be simplified.

Note that, although the microlenses **14a** of the microlens array **14** are provided corresponding to the pixels in the present embodiment, the microlens array **14** may be composed of lenticular lenses each covering a plurality of pixels.

With the liquid crystal display panel **100A** of the present embodiment, the protection layer **35** is affixed by the supports **26** and the apex portions of the plurality of microlenses **14a.** Therefore, a strong withstanding pressure is obtained, whereby deformation of the gaps **15** can be prevented even when the liquid crystal display panel **12** is depressed. Moreover, the interval between the rear-face side optical film **23** and the microlens array **14** is kept constant. Therefore, brightness unevenness due to changes in the interval between them can be suppressed and prevented.

Next, with reference to FIG. **2****,** a liquid crystal display panel **100B** with a microlens array (hereinafter may be simply referred to as the liquid crystal display panel **100B)** according to a variant of the present embodiment will be described. Among the constituent elements of this variant, those which are identical to the constituent elements of the embodiment shown in FIG. **1** above are denoted by like reference numerals, and the descriptions thereof are omitted.

In the liquid crystal display panel **100A** shown in FIG. **1****,** the protection layer **35** is attached to the liquid crystal display panel **12** via the neighborhoods of the apices of microlenses **14a** and the supports **26.** In the variant liquid crystal display panel **100B,** as shown in FIG. **2****,** the protection layer **35** is attached to the liquid crystal display panel **12** only via the supports **26.** Therefore, the protection layer **35** is not in contact with the microlenses **14a,** but a gap **15'** is formed between the microlens array **14** and the supports **26** across the entire microlens array **14.**

The liquid crystal display panel **100B** shown in FIG. **2** has a slightly lower withstanding pressure than that of the liquid crystal display panel **100A** shown in FIG. **1****.** However, since the microlenses **14a** are not in contact with the protection layer **35,** even if the liquid crystal display panel **12** is depressed, neither deformation of the microlenses **14a** nor deformation of the contacting portions between the microlenses **14a** and the protection layer **35** occurs, thereby preventing the brightness unevenness which could occur with such deformation.

In accordance with the above-described liquid crystal display panels **100A** and **100B,** a protection layer of UV curable resin is disposed on the light-incident side of the microlens array **14,** so that the adhesion layer is not in contact with the microlens array **14.** Therefore, even if the liquid crystal display panel or the liquid crystal display device is depressed, the adhesion layer material will not enter into the gaps **15** and **15',** thereby preventing display unevenness across the entire display surface.

Moreover, since a curable resin is used for the protection layer **35,** the protection layer 35 and the microlens array **14** can be firmly secured without employing an adhesion layer. As a result, a liquid crystal display panel having a high withstanding pressure and little display unevenness can be realized. Furthermore, by using for the protection layer **35** a curable resin of the same material as the microlens material or a material having the same refractive index as that of the microlens material, a liquid crystal display panel which is more firm and which has less display unevenness can be provided.

The present invention is suitably applied to a liquid crystal display panel having a pixel pitch of 50µm to 250µm, and in particular to a liquid crystal display panel with a pixel pitch of 200µm or less. The diameter of each microlens (a width along a direction in which its lens function is exhibited) is set substantially equal to the pixel pitch. The height of each microlens is about 10µm to 35µm, and is to be determined by the microlens diameter and the pixel pitch.

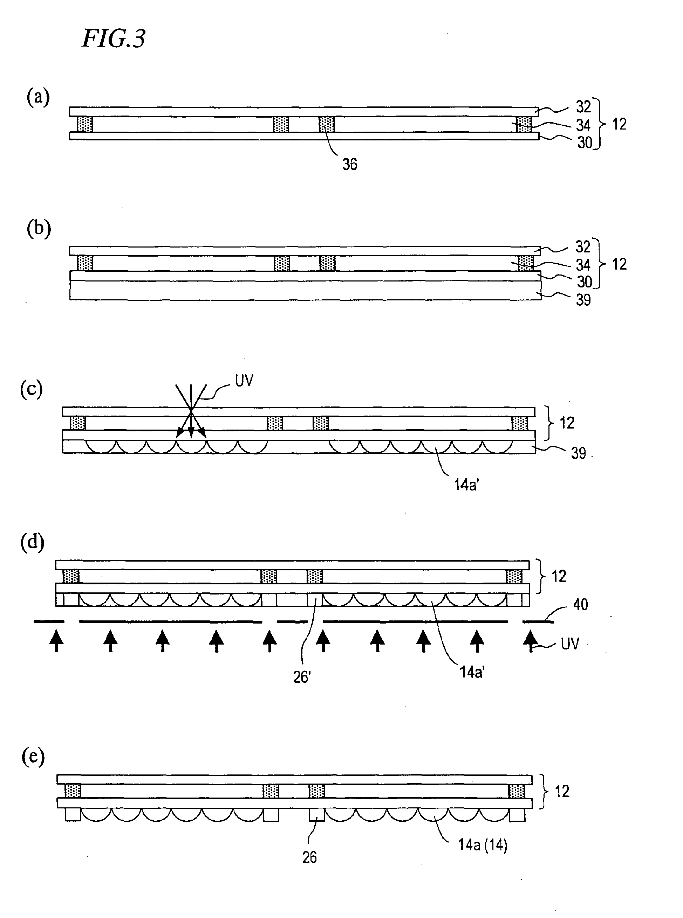

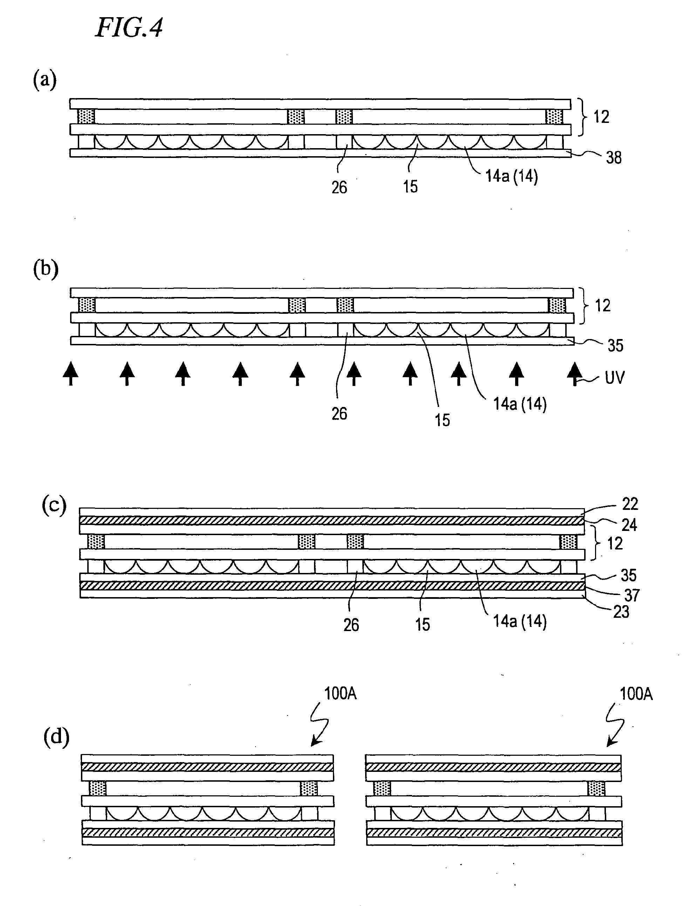

Next, with reference to FIGS. **3(a)** to **(e)** and FIGS. **4(a)** to **(d)**, a preferable production method for a liquid crystal display panel with a microlens array according to the present invention will be described. Herein, FIGS. **3(a)** to **(e)** and FIGS. **4(a)** to **(c)** show steps by which a plurality of liquid crystal display panels **100A** shown FIG. **1** are formed simultaneously on a single mother substrate, whereas FIG. **4(d)** shows steps by which the plurality of liquid crystal display panels **100A** formed on the mother substrate are cut off to become a plurality of liquid crystal display panels **100A** which are independent from one another. Therefore, in FIGS. **3(a)** to **(e)** and FIGS. **4(a)** to **(c)**, the constituent elements of the plurality of liquid crystal display panels **100A,** e.g., the electrical element substrates **30,** the counter substrates **32,** the protection layers **35,** the optical films **22** and **23,** and the like, are each shown as one continuous layer.

First, as shown in FIG. **3(a)****,** a liquid crystal display panel **12** having a plurality of pixels in a matrix arrangement is provided. The liquid crystal display panel **12** includes an electrical element substrate **30** such as a TFT substrate, a counter substrate **32** such as a color filter substrate, and a liquid crystal layer **34** containing a liquid crystal material. The liquid crystal layer **34** is formed by using a liquid crystal dropping method, and is sealed between the electrical element substrate 30 and the counter substrate **32** with a sealant **36.**

Although a liquid crystal injection method could be adopted for the formation of the liquid crystal layer **34,** use of the liquid crystal dropping method will make it easy to simultaneously form a plurality of liquid crystal display panels on a mother substrate within a short period of time. In the case where the liquid crystal injection method is adopted, a liquid crystal is to be injected after the liquid crystal display panel is formed. At this time, a problem of liquid crystal contamination may occur because of the microlens material or the like coming in contact with the liquid crystal. Use of the liquid crystal dropping method will also prevent such a contamination problem.

Next, as shown in FIG. **3(b)****,** a dry film (dry film resist) is attached on one of a pair of principal faces that is on the outside of the liquid crystal display panel **12,** thereby forming a resin layer **39.** A photocurable resin is used as the material of the resin layer **39.** Although it is preferable to use a UV-curable resin having a high transmittance for the dry film (resin layer **39),** a photocurable resin, a thermosetting resin, or a photocurable-thermosetting type resin can otherwise be used. In a subsequent step, microlenses **14a** are formed by processing the resin layer **39.** In order to realize a thin liquid crystal display device, it is desirable to make the thickness of the resin layer **39** as thin as possible, so long as a convergence effect is obtained with the microlenses.

Next, as shown in FIGS. **3(c)** to **(e)**, a microlens array **14** having the plurality of microlenses **14a** and supports **26** are formed by processing the resin layer **39.** Preferably, formation of the microlenses **14a** is performed by a method in self-aligning fashion (self alignment method) as described in Patent Document 3. According to this method, microlenses **14a** corresponding to the pixels can be easily formed with no misalignment of optical axes, whereby a high convergence effect can be obtained.

Based on this method, in the step shown in FIG. **3(c)****,** the resin layer **39** of UV curable resin is irradiated with UV light through the liquid crystal display panel **12.** During the UV light irradiation, the substrate or the UV light source is moved so as to change the incident angle of the irradiation light to the liquid crystal display panel **12** in a stepwise or gradual manner. As a result, the irradiation intensity of the irradiation light on the resin layer **39** is locally changed, whereby microlenses **14a** corresponding to the respective pixels (latent images **14a'** of microlenses) are formed.

Thereafter, as shown in FIG. **3(d)****,** the resin layer **39** is exposed to light from the opposite side of the liquid crystal display panel **12** through a photomask **40,** thereby forming supports **26** (latent images **26'** of supports) in a peripheral region of the microlens array **14.**

By performing a development step after this exposure step, as shown in FIG. **3(e)****,** the microlens array **14** having the plurality of microlenses **14a** is formed, and also the supports **26** are formed in the peripheral region of the microlens array **14.** Since the height of the supports **26** and the microlenses **14a** can be defined by the thickness of the resin layer **39,** a resin layer **39** having a high thickness uniformity can be obtained by using a dry film for the resin layer **39,** thereby providing an advantage in that the height of the supports **26** and the microlenses **14a** (maximum height) can be precisely controlled to the same height.

Thereafter, as shown in FIG. **4(a)****,** the same dry film as the dry film used for forming the resin layer **39** is attached so as to be in contact with apex portions of the microlenses **14a** and the supports **26,** thus forming a resin layer **38.** At this time, if the attachment pressure is too high, the dry film may enter into the recesses of the microlenses **14a;** conversely, if it is too low, the degree of contact will decrease. Therefore, it is desirable that the attachment pressure is within a range from 0.05 to 1 MPa.

It is desirable that the temperature at which the dry film is attached is no less than 50 degrees and no more than the glass transition temperature of the dry film (which is 110 degrees in the present embodiment). If it is 50 degrees or less, the degree of contact between the dry film and the microlenses **14a** and supports **26** will decrease, and thus peeling becomes likely to occur; and if it is greater than the glass transition temperature, the dry film will be so soft that the dry film may be buried in the microlens array. Moreover, it is preferable that the speed at which the dry film is press-fitted to the microlens array **14** is within the range from 0.5 to 4 m/min. If the speed is too fast, the degree of contact will be low, and if it is too slow, the production efficiency will be deteriorated.

Next, as shown in FIG. **4(b)****,** the resin layer **38** is subjected to UV irradiation to perform a bake, whereby a protection layer **35** is formed. Since the protection layer **35** is secured to the apex portions of the microlenses **14a** and the supports **26,** peeling of the protection layer **35** and the rear-face side optical film **23** to be formed in a substrate step and display unevenness due to deformation of the protection layer **35** are prevented.

Thereafter, as shown in FIG. **4(c)****,** the rear-face side optical film **23** is attached to the liquid crystal display panel **12** via the adhesion layer **37** and the supports **26,** and the front-face side optical film **22** is attached to the liquid crystal display panel **12** via the adhesion layer **24.** Preferably, the rear-face side optical film **23** is attached immediately after forming the protection layer **35.** This will prevent the protection layer **35** from being scratched, and make for an easy handling in the next step. Note that the front-face side optical film **22** can be attached to the liquid crystal display panel **12** at any arbitrary point in the aforementioned steps.

Finally, as shown in FIG. **4(d)****,** by using a method described in Japanese Laid-Open Patent Publication No. 2004-4636, for example, the multilayer substrate shown in FIG. **4(c)** is cut, whereby a plurality of liquid crystal display panels **100A** with microlens arrays are completed.

In the steps in FIGS. **3(c)** to **(e)** above, the microlens array **14** and the like can be formed by a method such as a transfer technique, for example. In the case of using a transfer technique, a stamper is pressed against the resin layer **39** to transfer a template of the stamper, whereby the microlens array **14** and the supports **26** are formed. As a result, a liquid crystal display panel having a similar structure to that which is shown in FIG. **3(e)** is obtained.

Note that, in the case of producing the variant liquid crystal display panel **100B** shown in FIG. **2****,** the resin layer **39** may be exposed to light so that the thickness of the apex portions of the latent images **14a'** of the microlenses is thinner than the thickness of the resin layer **39,** by adjusting the irradiation light in the aforementioned exposure step of FIG. **3(c)****.**

Next, the shape of the microlenses **14a** to be formed in the aforementioned steps will be described.

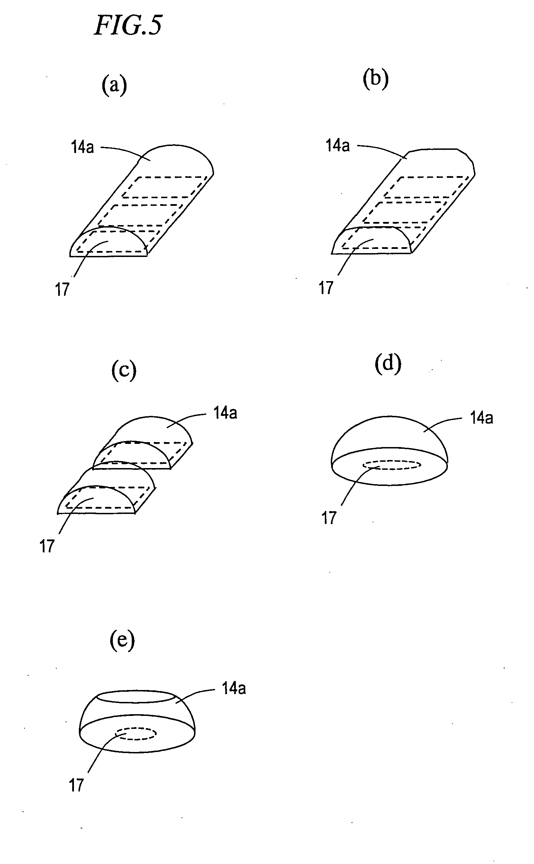

FIG. **5** is diagrams schematically exemplifying shapes of the microlenses **14a** to be formed in the steps shown in FIGS. **3(a)** to **(c)**. In these steps, by adjusting the distribution of irradiation light amount for the resin layer **39,** lenticular lenses each encompassing a plurality of pixel apertures (or pixels) **17** can be formed as shown in FIGS. **5(a)** and **(b)**, or microlens corresponding to the respective pixel apertures **17** can be formed as shown in FIGS. **5(c)** to **(e)**. The lens shown in FIG. 5**(a)** is a semicolumnar lenticular lens; and the lens shown in FIG. **5(b)** is a lenticular lens having a flat portion in the neighborhood of its apex. The lenses shown in FIG. **5(c)** are semicolumnar microlenses which are formed for the respective pixels; the lens shown in FIG. **5(d)** is a hemispherical microlens which is formed for each pixel; and the lens shown in FIG. **5(e)** is a hemispherical microlens whose apex portion is planarized.

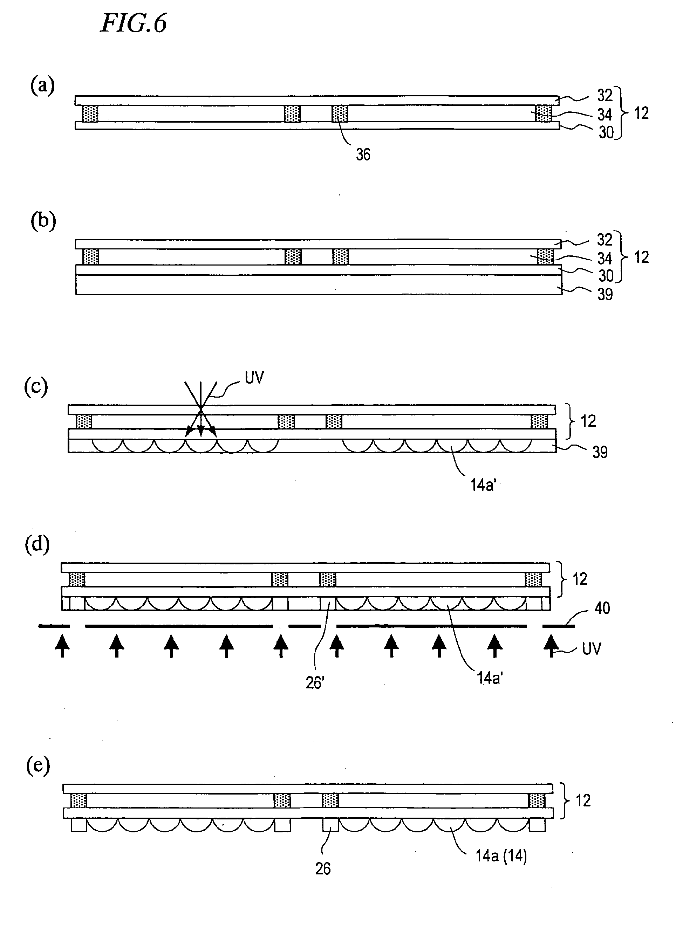

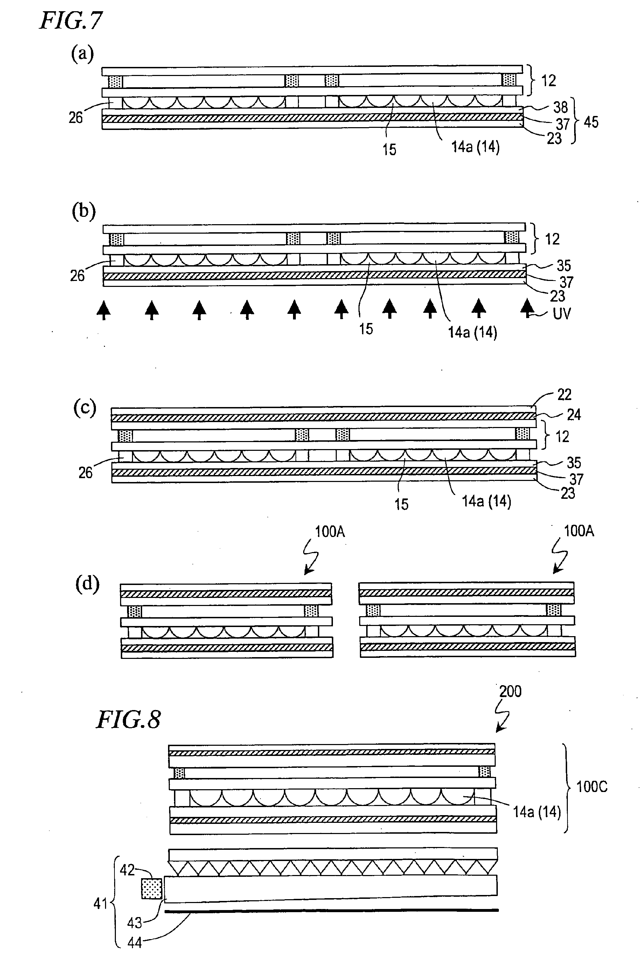

Next, with reference to FIGS. **6(a)** to **(e)** and FIGS. **7(a)** to **(d)**, a second production method for a liquid crystal display panel with a microlens array according to the present invention will be described. In the second production method, the steps shown in FIGS. **6(a)** to **(e)** are identical to the step shown in FIGS. **3(a)** to **(e)** above, and the descriptions thereof are omitted.

In the second production method, as shown in FIG. **7(a)****,** on the liquid crystal display panel **12** having been formed in the step shown in FIG. **6(e)** and having the microlens array **14** and the supports **26** formed thereon, a multilayer substrate **45** of the rear-face side optical film **23** and the resin layer **38** is attached. The multilayer substrate **45** is obtained by attaching the same dry film (resin layer **38)** as the dry film used for forming the resin layer **39** to the rear-face side optical film **23** via an adhesion layer **37.**

Herein, the multilayer substrate **45** is attached to the liquid crystal display panel **12** by being press-fitted so that the dry film is in contact with the apex portion of each microlens **14a** and the supports **26.** Again, if the attachment pressure is too high, the dry film may fill the recesses of the microlenses **14a.** Therefore, it is desirable that the attachment pressure is 10 MPa or less.

In the second production method, after the resin layer **38** and the rear-face side optical film **23** become an integral piece, they are attached to the liquid crystal display panel **12.** Therefore, at the time of attachment, deformation of the resin layer **38** and its intrusion into the gaps **15** are prevented, thereby providing an advantage of preventing display unevenness.

Next, as shown in FIG. **7(b)****,** the resin layer **38** is subjected to UV irradiation through the rear-face side optical film **23,** whereby the resin layer **38** is baked to become a protection layer **35.** Here, the protection layer **35** is secured to the apex portions of the microlenses **14a** and the supports **26,** whereby the entire multilayer substrate **45** is affixed to the liquid crystal display panel **12.**

Thereafter, as shown in FIG. **7(c)****,** the front-face side optical film **22** is attached to the liquid crystal display panel **12** via an adhesion layer **24.** The front-face side optical film **22** may be attached to the liquid crystal display panel **12** at any arbitrary point in the aforementioned steps.

Finally, as shown in FIG. **7(d)****,** by using a method described in Japanese Laid-Open Patent Publication No. 2004-4636, for example, the multilayer substrate shown in FIG. **4(c)** is cut, whereby a plurality of liquid crystal display panels **100A** with microlens arrays are completed.

In the two above-described production methods, the microlens array **14** is formed by exposing the resin layer **39** to light. However, a microlens array may be formed on the surface of a glass substrate of a liquid crystal display panel integrally, as is described in USP No. 6989874, for example. The protection layer **35** can be attached also to such a liquid crystal display panel, with the above-described methods. A liquid crystal display panel with a microlens array which is formed with such a method is also encompassed within the scope of the present invention.

FIG. **8** schematically shows the construction of a liquid crystal display device **200** having a liquid crystal display panel **100C** according to an embodiment of the present invention. The liquid crystal display panel **100C** corresponds to the liquid crystal display panels **100A** and **100B** with a microlens array of the present embodiment.

The liquid crystal display device **200** includes the liquid crystal display panel **100C** and a backlight **41** having high directivity. The backlight **41** includes a light source **42,** a light guide plate **43** for receiving light emitted from the light source **42** and allowing it to propagate therethrough and be emitted toward the liquid crystal display panel 100C, and a reflector **44** for causing the light which is emitted from the rear face of the light guide plate **43** or light which is incident from outside of the liquid crystal display device **200** and transmitted through the liquid crystal display panel **100C** and the light guide plate **43** to be reflected toward the light guide plate **43.**

The backlight **41** emits light that has a low directivity along the direction in which LEDs used as the light source **42** are arranged and a high directivity along a direction which is orthogonal thereto. Note that directivity is an index indicating a degree of divergence (or a degree of parallelism) of light from the backlight **41,** and usually an angle which results in a brightness that is half of the brightness in the frontal direction is defined as a half-directivity angle. Therefore, as this half-directivity angle becomes smaller, the backlight has more of a peak (having a high directivity) in the frontal direction.

As the backlight **41** suitable for use in the liquid crystal display device **200,** for example, backlights which are described in IDW'02 "Viewing Angle Control using Optical Microstructures on Light-Guide Plate for Illumination System of Mobile Transmissive LCD Module ", K.KALANTAR, p549-552, IDW'02 "Prism-sheetless High Bright Backlight System for Mobile Phone" A. Funamoto et al. p.687-690, Japanese Laid-Open Patent Publication No. 2003-35824, Japanese National Phase PCT Laid-Open Publication No. 8-511129, and the like are applicable.

By providing the microlens array **14,** light which illuminates areas other than the pixels (apertures), i.e., light which is emitted from the backlight **41** toward a light-shielding film BM that is formed around the pixels, is guided by the microlenses **14a** to the pixels and emitted from the liquid crystal display panel **100C.** As a result, the efficiency of light utility of the backlight **41** is improved.

In order to obtain a high efficiency of light utility in a display panel having microlenses, such as the liquid crystal display panel **100C,** it is preferable that the backlight **41** has a high directivity. In other words, it is preferable that the half-directivity angle of light emitted from the backlight **41** is small.

On the other hand, as for the pixels, a higher efficiency of light utility can be obtained as their apertures become larger. However, in a transflective-type liquid crystal display panel, its characteristics as a reflection type are also important, and only a portion of each pixel (transmission region) is used for transmission displaying; therefore, there is a limitation to the aperture ratio (area ratio of the transmission region). In many cases, the aperture ratio in a transflective-type liquid crystal display panel is 20 to 60%. Thus, the present invention is suitably used for a liquid crystal display panel having a low aperture ratio, such as a transflective-type liquid crystal display panel.

According to the present invention, a protection layer of curable resin is attached to the light-incident side of a microlens array. Therefore, adhesive materials and the like will not be in contact with the microlens array, and also the strength of the neighborhood of the microlens array can be enhanced. Hence, even if the liquid crystal display panel is depressed during a production step or during use of the product, adhesive materials and the like will not enter into the gaps between the microlens array and the protection layer, whereby deformation of the gaps is also prevented. As a result, there is provided a high-quality liquid crystal display panel with microlenses and a high-quality liquid crystal display device having a high strength and suffering from little display unevenness across the entire display surface. Moreover, according to the present invention, such a liquid crystal display panel and a liquid crystal display device can be produced efficiently.

### INDUSTRIAL APPLICABILITY

The present invention improves the displaying quality of a liquid crystal display panel and a liquid crystal display device, and particularly improves the quality of a liquid crystal display panel and a liquid crystal display device which have a relatively small aperture ratio, such as a transflective-type liquid crystal display panel.

## Claims

1. A liquid crystal display panel with a microlens array, comprising:
a liquid crystal display panel having a plurality of pixels;
a microlens array provided on a light-incident side of the liquid crystal display panel;
a protection layer provided in contact with at least one of the microlens array and a support which is provided in a peripheral region of the microlens array, the protection layer being made of a curable resin; and
a rear-face side optical film attached to the liquid crystal display panel via the protection layer, wherein,
a gap is formed between the microlens array and the protection layer.

2. The liquid crystal display panel with a microlens array of claim 1, wherein the protection layer is made of substantially the same material as a material composing the microlens array.

3. The liquid crystal display panel with a microlens array of claim 1 or 2, wherein the protection layer is made of a material having a refractive index which is substantially equal to a refractive index of a material composing the microlens array.

4. The liquid crystal display panel with a microlens array of any of claims 1 to 3, wherein the protection layer is attached to the liquid crystal display panel via the microlens array, and the protection layer and the microlens array are attached so as to be in contact only at neighborhoods of apices of the microlenses composing the microlens array.

5. The liquid crystal display panel with a microlens array of any of claims 1 to 3, wherein the protection layer is formed so as to be in contact wit the support, and is attached to the liquid crystal display panel only via the support.

6. The liquid crystal display panel with a microlens array of any of claims 1 to 5, wherein the support is made of the same material as the microlens array.

7. The liquid crystal display panel with a microlens array of any of claims 1 to 6, wherein the support is made of a photocurable resin.

8. The liquid crystal display panel with a microlens array of any of claims 1 to 7, wherein the rear-face side optical film is attached to the protection layer via the adhesion layer.

9. A liquid crystal display device comprising the liquid crystal display panel with a microlens array of any of claims 1 to 8.

10. A production method for a liquid crystal display panel with a microlens array, including a liquid crystal display panel, a microlens array provided on a light-incident side of the liquid crystal display panel, and a rear-face side optical film provided on a light-incident side of the microlens array, the method comprising:
(a) a step of forming a microlens array on a surface of a liquid crystal display panel;
(b) a step of forming a resin layer of curable resin on the light-incident side of the microlens array; and
(c) a step of forming a protection layer by curing the resin layer, wherein,
at step (b), the resin layer is formed so as to be in contact with at least one of the microlens array and a support which is provided in a peripheral region of the microlens array, and a gap is formed between the microlens array and the resin layer.

11. The production method of claim 10, wherein, in step (b), the resin layer is attached in a dry film form to at least one of the microlens array and the support.

12. The production method of claim 10 or 11, wherein, in step (b), the resin layer is formed so that the resin layer and the microlens array are in contact only at neighborhoods of apices of the microlenses composing the microlens array.

13. The production method of claim 10 or 11, wherein, in step (b), the resin layer is formed so as to be in contact only with the support.

14. The production method of any of claims 10 to 13 comprising, after step (c), a step of attaching a rear-face side optical film to the protection layer.

15. The production method of any of claims 10 to 13 comprising, before step (b), a step of attaching the resin layer to a rear-face side optical film.

16. The production method of any of claims 10 to 15, wherein step (a) comprises a step of forming a photocurable resin layer on a surface of the liquid crystal display panel and a step of forming the microlens array by exposing the photocurable resin layer to light through the liquid crystal display panel.

17. The production method of claim 16, wherein step (a) comprises a step of forming the support by exposing the photocurable resin layer to light through a mask.

18. The production method of any of claims 10 to 17, wherein the protection layer is made of substantially the same material as a material composing the microlens array.

19. The production method of any of claims 10 to 18, wherein the protection layer is made of a material having a refractive index which is substantially equal to a refractive index of a material composing the microlens array.

20. The production method of any of claims 10 to 19 comprising, after step (c), a step of cutting an attached substrate including the liquid crystal display panel, the microlens array, the protection layer, and the rear-face side optical film to form a plurality of liquid crystal display panels with microlens arrays.
